# EUROPÄISCHE PATENTSCHRIFT

(11) **EP 3 523 841 B1**
(45) Veröffentlichungstag und Bekanntmachung des Hinweises auf die Patenterteilung: **26.02.2025**
(21) Anmeldenummer: 17783450.4
(22) Anmeldetag: 06.10.2017
(51) Int. Cl.: H01M 50/211, H01M 50/227, H01M 50/271, H01M 50/507, H01M 50/516, H01M 50/522

(54) **ENERGIESPEICHERMODUL UND VERFAHREN ZUM ZUSAMMENBAU**
ENERGY STORAGE MODULE AND ASSEMBLY METHOD
MODULE DE STOCKAGE D'ÉNERGIE ET PROCÉDÉ D'ASSEMBLAGE

(30) Priorität: 06.10.2016 DE 102016118977
(43) Veröffentlichungstag der Anmeldung: 14.08.2019
(60) Teilanmeldung: 24214724.7
(73) Patentinhaber: Clarios Advanced Solutions GmbH, 30419 Hannover (DE)
(72) Erfinder: EISERMANN, Henning, 31311 Uetze (DE); SCHWARZIEN, Benjamin, 30989 Gehrden (DE); BIRKHOLZ, Jörg, 31157 Sarstedt (DE); JANSEN, Marco, 29229 Celle / Groß Hehlen (DE); JOSWIG, Ralf, 29690 Buchholz / Aller (DE)
(74) Vertreter: Meissner Bolte Partnerschaft mbB
(86) Internationale Anmeldenummer: PCT/EP2017/075488
(87) Internationale Veröffentlichungsnummer: WO 2018/065580

(56) Entgegenhaltungen:
- EP-A1- 2 752 918
- WO-A1-2015/152527
- KR-A- 20150 055 255

## Beschreibung

Die vorliegende Erfindung betrifft ein Energiespeichermodul gemäß dem Oberbegriff des ersten Patentanspruchs. Die Erfindung betrifft außerdem ein Verfahren zum Zusammenbau eines Energiespeichermoduls gemäß dem Oberbegriff des Patentanspruchs 11.

Derartige Energiespeichermodule werden in vielen Bereichen der Technik eingesetzt. Die vorliegende Erfindung betrifft insbesondere den Bereich der Energiespeichermodule für Fahrzeuge, wobei es sich bei einem Fahrzeug um ein Luft- oder Wasserfahrzeug, ein spurgeführtes Fahrzeug, ein Geländefahrzeug, oder bevorzugt um ein Straßenfahrzeug handeln kann. Als Straßenfahrzeuge werden insbesondere Personenkraftwagen, Lastkraftwagen, Busse oder Wohnmobile verstanden. In Fahrzeugen werden unterschiedliche Arten von Batteriemodulen verbaut, darunter Traktionsbatterien (insbesondere bei Elektrofahrzeugen) und Starterbatterien (Autobatterien). Im Folgenden soll eine Starterbatterie insbesondere dadurch festgelegt sein, dass sie zumindest einen Anteil der Energie, vorzugsweise die gesamte Energie, bereitstellt, welche zum Starten eines Fahrzeuges und/oder zum Versorgen von fahrzeuginternen Systemen (Beleuchtung, Pumpen, Zündung) notwendig ist. Als Starterbatterien werden üblicherweise Bleiakkumulatoren eingesetzt, welche jedoch insbesondere aufgrund ihrer niedrigen Energiedichten ein hohes Gewicht aufweisen. Lithium-Ionen Akkumulatoren hingegen weisen eine hohe Energiedichte auf. Zudem haben Lithium-Ionen-Akkumulatoren beispielsweise eine höhere Lebensdauer, eine geringere Selbstentladung, eine verbesserte Schnellladefähigkeit sowie geringere Wartungsintervalle als herkömmliche Bleiakkumulatoren.

WO 2015/152527 A1 betrifft ein herkömmliches Energiespeichermodul gemäß dem Oberbegriff des unabhängigen Patentanspruchs 1.

Insgesamt werden, insbesondere aufgrund der steigenden Anzahl von Energieverbrauchern, immer höhere Anforderungen an die Leistungsfähigkeit, das Gewicht, die Zuverlässigkeit und die Herstellungskosten von Batteriemodulen in Fahrzeugen gestellt.

Daher liegt der Erfindung die Aufgabe zugrunde, ein Energiespeichermodul für die Serienfertigung, insbesondere Großserienfertigung, rationeller zu gestalten, insbesondere im Hinblick auf automatisierte Fertigungsprozesse in Anwendungen für die Automobiltechnik. Zudem ist es eine Aufgabe der vorliegenden Erfindung, ein Energiespeichermodul derart zu gestalten, dass es zum einen zweckmäßig in modularen Fertigungsprozessen einsetzbar ist, und zum anderen besonders gut geeignet für eine spätere Verwendung in Fahrzeugen ist. Ferner soll ein verbessertes Verfahren zum Zusammenbau für solche Energiespeichermodule angegeben werden.

Diese Aufgabe wird durch ein Energiespeichermodul gemäß dem Wortlaut des Anspruchs 1 sowie durch ein Verfahren zum Zusammenbau eines Energiespeichermoduls gemäß dem Wortlaut des Anspruchs 11. Vorteilhafte Weiterbildungen sind in den abhängigen Ansprüchen angegeben.

Der Begriff "flächig ausgebildetet Anschlussfahne" und die Kurzform "Anschlussfahne" wird synonym verwendet.

Vorzugsweise handelt es sich bei dem Energiespeichermodul um eine Starterbatterie für ein Fahrzeug und besonders bevorzugt sind die elektrochemischen Zellen Lithium-Ionen-Zellen, wodurch die eingangs genannten Vorteile von Lithium-Ionen-Zellen im Vergleich zu Bleiakkumulatoren realisierbar werden. Vorzugsweise ist die Lithium-Ionen-Zelle als Pouch-Zelle ausgebildet.

Durch den erfindungsgemäßen Vorschlag, das Zellenpaket derart auszubilden, dass die ersten und zweiten flächig ausgebildeten Anschlussfahnen sich zumindest im Wesentlichen senkrecht von zwei gegenüberliegenden Seiten des Zellenpakets aus erstrecken, und die Kontaktierungsvorrichtung (zumindest) im Wesentlichen kammförmig auszubilden, wird eine äußerst kompakte Bauweise erreicht, welche einfach, das heißt in wenigen und/oder unkomplizierten Schritten zusammenbaubar ist. Gleichzeitig ist jedoch auch eine äußerst sichere und gute Kontaktierung zwischen den elektrochemischen Zellen und der Kontaktierungsvorrichtung erzielbar.

Im Wesentlichen senkrecht von einer Seite des Zellenpakets bedeutet in diesem Zusammenhang, dass der Winkel zwischen der Seite des Zellenpakets und der jeweiligen Anschlussfahne innerhalb eines Bereich von 70 Grad bis 110 Grad, vorzugsweise innerhalb eines Bereichs von 80 Grad bis 100 Grad, und besonders bevorzugt innerhalb eines Bereichs von 85 Grad bis 95 Grad liegt. Insbesondere ist es selbstverständlich in diesem Zusammenhang äußerst bevorzugt, wenn der Winkel 90° beträgt.

Somit ist die Kontaktierungsvorrichtung ebenfalls modular aufgebaut, wodurch sich die Modularität des Gesamtsystems weiter erhöht, da unterschiedliche Sammelschienen eingebaut werden können. Es entstehen somit mehr Möglichkeiten zum Zusammenbau (Variantenanzahl steigt) und gleichzeitig weniger Einschränkung (Vorabfestlegungen).

Des Weiteren erhöht sich die Stabilität der Kontaktierungsvorrichtung durch den mindestens einen Träger, welcher auch weitere Zentrierungs- oder Einbauhilfen aufweisen kann.

Durch den erfindungsgemäßen Vorschlag, die Kontaktierungsvorrichtung aus mindestens einer Sammelschiene und mindestens einem Träger aufzubauen, wird zudem eine Trennung der Funktionen angestrebt. Diesbezüglich erfüllt die mindestens eine Sammelschiene die Funktion einer elektrischen Kontaktierung und der mindestens eine Träger die Funktion einer Halterung bzw. einer Befestigung und/oder einer Zentrierung bzw. einer Positionierung.

Dadurch ist es insbesondere möglich, die Kontaktierungsvorrichtung derart auszubilden oder zu gestalten, dass lediglich die mindestens eine Sammelschiene aus elektrisch leitfähigem Material ausgebildet ist, wohingegen die Kontaktierungsvorrichtung aus einem elektrisch nicht leitfähigen Material ausgebildet werden kann. Es ist somit möglich, stromführende Bereiche von Bereichen, welche keinen Strom führen, zu trennen. Als Material für den mindestens einen Träger kommt dabei beispielsweise ein Acrylnitril-Butadien-Styrol, Polycarbonat, Polyamid, Polyvinylchlorid, Polyethylenterephthalat, Polyoxymethylen oder ein Copolymer hiervon in Frage.

Gemäß einer vorteilhaften Weiterbildung der Erfindung weist das Energiespeichermodul zwei Kontaktierungsvorrichtungen auf, wobei eine erste der beiden Kontaktierungsvorrichtungen Anschlussfahnen auf einer ersten Seite der beiden gegenüberliegenden Seiten des Zellenpakets kontaktiert, und wobei eine zweite der beiden Kontaktierungsvorrichtungen Anschlussfahnen auf einer zweiten Seite der beiden gegenüberliegenden Seiten des Zellenpakets kontaktiert.

Dementsprechend ist es möglich, auf der ersten Seite der beiden gegenüberliegenden Seiten des Zellenpakets die erste Kontaktierungsvorrichtung aufzuschieben bzw. aufzustecken und auf der zweiten Seite der beiden gegenüberliegenden Seiten des Zellenpakets die zweite Kontaktierungsvorrichtung aufzuschieben bzw. aufzustecken.

Durch unterschiedliche Anordnungen der elektrochemischen Zellen bzw. genauer durch die Ausrichtung ihrer Anschlussfahnen zu einer ersten oder zweiten Seite der beiden gegenüberliegenden Seiten des Zellenpakets wird ermöglicht, einzelne Zellen oder Gruppen von einzelnen Zellen parallel oder in Reihe zu schalten.

Gemäß einer vorteilhaften Weiterbildung der Erfindung ist jede der ersten und zweiten flächig ausgebildeten Anschlussfahnen jeweils zwischen zwei benachbarten Zinken der mindestens einen Kontaktierungsvorrichtung aufgenommen.

Somit ist es möglich, jede einzelne der Anschlussfahnen mit der Kontaktierungsvorrichtung in einem späteren Arbeitsschritt elektrisch zu verbinden. Der erfindungsgemäße Vorschlag stellt somit einen besonders schnellen und rationellen Zusammenbau eines Energiespeichermoduls zur Verfügung, insbesondere dadurch dass die kammförmige Kontaktierungsvorrichtung auf die Anschlussfahnen der elektrochemischen Zellen aufgeschoben werden können. Es ist daher mit wenigen Handgriffen möglich, das Energiespeichermodul zusammenzubauen bzw. für einen nachfolgenden Montageschritt bereitzustellen.

Des Weiteren wirken die Zinken mit den Anschlussfahnen als eine Art Zentrierungsvorrichtung zusammen und erleichtern somit weiter den Zusammenbau. Selbstverständlich ist es in diesem Zusammenhang denkbar, dass weitere Zentrierungsvorrichtungen, insbesondere an der Kontaktierungsvorrichtung, vorgesehen sind.

Weitere Vorteile werden auch dadurch erlangt, dass bei einer Verwendung von Pouch-Zellen diese direkt zu einem Zellenpaket ausgebildet werden können. Das heißt, dass es beispielweise nicht mehr nötig ist, mehrere Pouch-Zellen durch einen vorherigen Montageschritt zu verbinden. Insbesondere wird dadurch auch die Anwendung des Energiespeichermoduls insgesamt universeller, da die einzelnen Zellen bzw. ihre Anschlussfahnen unterschiedlich zueinander ausgerichtet werden können. Somit muss also nicht vorab festgelegt werden, ob eine Reihen- oder Parallelschaltung einzelner Zellen erreicht werden soll.

Auch ist es nicht mehr nötig, Pouch-Zellen mit unterschiedlich ausgebildeten Anschlussfahnen, welche sich durch ihre unterschiedliche Ausbildung zum Bündeln eignen, zu verwenden. Des Weiteren wird auch eine Verwendung einzelner Kontaktierungsvorrichtungen, das heißt pro Anschlussfahne eine zugehörige Kontaktierungsvorrichtung, verhindert und die Teileanzahl sinkt.

Insgesamt sinken sowohl die Kosten als auch die Durchlaufzeit der Fertigung deutlich. Unter Durchlaufzeit wird in diesem Zusammenhang die Zeitspanne verstanden, welche bei der Fertigung eines Produktes zwischen dem Beginn des ersten Arbeitsvorganges und dem Abschluss des letzten Arbeitsvorganges verstreicht.

Gemäß einer vorteilhaften Weiterbildung der Erfindung ist die mindestens eine Sammelschiene in dem mindestens einen Träger aufnehmbar bzw. aufgenommen und/oder an ihm befestigbar bzw. befestigt.

Somit wird der Zusammenbau weiter vereinfacht, insbesondere, wenn der mindestens eine Träger festgelegte Bereiche aufweist, in welche die mindestens eine Sammelschiene aufnehmbar ist. Derartige Bereiche können beispielsweise durch eine Außenkontur des Trägers und/oder durch Stege realisiert sein. Insbesondere wird somit auch sichergestellt, dass die Sammelschiene in einer bestimmten und vorgesehenen Art und Weise mit dem mindestens einen Träger verbunden wird. Zur Befestigung eignen sich beispielsweise Fügemittel, insbesondere Klebstoffe, vorzugsweise solche in Form von Klebestreifen.

Gemäß einer vorteilhaften Weiterbildung der Erfindung weist die mindestens eine Kontaktierungsvorrichtung eine Vielzahl von Sammelschienen auf, wobei die Vielzahl von Sammelschienen eine erste Vielzahl von Sammelschienen aus einem ersten Material und eine zweite Vielzahl von Sammelschienen aus einem zweiten Material aufweist, und wobei das erste Material sich von dem zweiten Material unterscheidet.

Dadurch wird den unterschiedlichen Materialanforderungen bei der Kontaktierung von positiven bzw. negativen Elektroden genüge getan. Üblicherweise werden in Lithium-Ionen-Zellen elektrische Kontaktstücke aus Aluminium zur Kontaktierung auf der positiven Elektrodenseite verwendet, wohingegen auf der negativen Elektrodenseite Kupfer, Nickel, oder vernickeltes Kupfer eingesetzt wird, da es bei einer Verwendung von Aluminium auf der negativen Elektrodenseite aufgrund des gegebenen Potentials sonst zu einer Legierung von Lithium und Aluminium kommen würde. Dementsprechend sind Sammelschienen, welche die positive Elektrodenseite bzw. die Anschlussfahne der positiven Elektrodenseite kontaktieren vorzugsweise aus Aluminium und Sammelschienen, welche die negative Elektrodenseite, bzw. die Anschlussfahne der negativen Elektrodenseite kontaktieren vorzugsweise aus Kupfer, Nickel, oder vernickeltem Kupfer hergestellt.

Zusätzlich kann mindestens eine der Vielzahl von Sammelschienen einen Sensoranschluss, insbesondere für einen Temperatursensor und/oder Stromsensor, aufweisen.

Besonders bevorzugt können eine erste Sammelschiene der Vielzahl von Sammelschienen und eine zweite Sammelschiene der Vielzahl von Sammelschienen in einem vorherigen Arbeitsschritt bereits verschweißt worden sein. Um eine ersten Sammelschiene aus einem ersten Material und eine zweite Sammelschiene aus einem zweiten Material zu verschweißen, kann es notwendig sein, eine Bimetallplatte zu verwenden, um den Schweißprozess zu vereinfachen. Insbesondere ist dies bei einem Verschweißen von Kupfer und Aluminium durchaus sinnvoll. Dementsprechend kann die Kontaktierungsvorrichtung zusätzlich eine Bimetallplatte aufweisen.

Gemäß einer vorteilhaften Weiterbildung der Erfindung weist der mindestens eine Träger und/oder die mindestens eine Sammelschiene Zentrierungsvorrichtungen auf. Selbstverständlich ist es in diesem Zusammenhang denkbar, dass auch die Bimetallplatte eine Zentrierungsvorrichtung aufweist.

Vorzugsweise sind diese Zentrierungsvorrichtungen durch Bohrungen und zugehörige Stifte gegeben, wobei besonders bevorzugt die mindestens eine Sammelschiene und gegebenenfalls die Bimetallplatte Bohrungen aufweisen und der mindestens eine Träger Stifte aufweist. Gleichzeitig ist es durch die Zentrierungsvorrichtungen möglich, den Zusammenbau nach dem "Poka Yoke"-Prinzip derart zu gestalten, dass die Zentrierungsvorrichtungen den Zusammenbau vorgeben. Das heißt, dass eine Sammelschiene ausschließlich in einer bestimmten Ausrichtung bzw. ausschließlich in einem bestimmten Bereich des Trägers anordbar ist.

Gemäß einer vorteilhaften Weiterbildung der Erfindung weist die mindestens eine Sammelschiene einen Anschlussbereich zum elektrischen Kontaktieren eines elektrischen Verbrauchers auf.

In diesem Sinne muss die Verbindung zu dem Verbraucher nicht direkt erfolgen. Vielmehr kann beispielsweise mindestens ein weiteres elektrisches Verbindeglied zwischen dem Verbraucher und dem Energiespeichermodul angeordnet sein.

Vorzugsweise ist der Anschlussbereich an einem oberen Ende, das heißt an einem von den Zinken abgewandten Ende der Sammelschiene, angeordnet. Somit lässt sich ein besonders gut zugänglicher Anschlussbereich der Sammelschiene realisieren.

Gemäß einer vorteilhaften Weiterbildung der Erfindung weisen die Zinken des mindestens einen Trägers und/oder die Zinken der mindestens einen Sammelschiene angefaste Endbereiche auf.

Auch dies dient einem zusammenbaugerechten Gestalten. Dementsprechend wird das Einführen, Aufstecken oder Aufschieben der Kontaktierungsvorrichtung insgesamt vereinfacht. Zudem wird ein Verkanten mit den Anschlussfahnen der elektrochemischen Zellen wirkungsvoll verhindert.

Gemäß einer vorteilhaften Weiterbildung der Erfindung weisen die Zinken des mindestens einen Trägers angefaste Endbereiche auf und die Zinken der mindestens einen Sammelschiene erstrecken sich nicht bis zu den angefasten Endbereichen der Zinken des mindestens einen Trägers, wenn die mindestens eine Sammelschiene in dem mindestens einen Träger aufgenommen und/oder an ihm befestigt ist.

Der erfindungsgemäße Vorschlag liefert somit zum einen immer noch die Vorteile eines angefasten Endbereichs, insbesondere eine Vereinfachung des Zusammenbaus, zum anderen wird der Aufwand reduziert, da lediglich die Zinken des mindestens einen Trägers angefaste Endbereiche aufweisen. Dementsprechend ist es nicht mehr nötig, die Sammelschienen aufwändig anzufasen. Bei einer Verwendung eines Kunststoffmaterials für den Träger ist zudem eine besonders einfache Ausgestaltung der angefasten Endbereiche, beispielsweise durch eine entsprechend geformte Gussform, möglich.

Gemäß einer vorteilhaften Weiterbildung weist der mindestens eine Träger eine Vielzahl von Bohrungen auf, wobei die mindestens eine Sammelschiene eine Vielzahl zugehöriger Bohrungen aufweist, wobei die Bohrungen des Trägers mit den Bohrungen der Sammelschiene fluchten, wenn die mindestens eine Sammelschiene in dem Träger aufgenommen und/oder an ihm befestigt ist.

Vorzugsweise sind zumindest einige, insbesondere jede der Bohrungen der Vielzahl von Bohrungen der Sammelschiene in dem Anschlussbereich vorgesehen, um diesen stabil befestigen zu können.

Des Weiteren können Bohrungen zusätzlich oder ausschließlich auch dazu dienen, eine Befestigungsmöglichkeit für diverse Sensoren bereitzustellen. Dies ist insbesondere dann einfach umsetzbar, wenn die Sensoren über Anschlüsse mit Ringzungen verfügen. Selbstverständlich sind in diesem Zusammenhang auch zugehörige Befestigungsmittel, insbesondere Schrauben, Nieten oder Bolzen, bereitgestellt.

Gemäß einer vorteilhaften Weiterbildung der Erfindung ist eine Gewindeplatte mit einer Vielzahl von Bohrungen derart zwischen dem mindestens einen Träger und der mindestens einen Sammelschiene angeordnet und ausgerichtet, dass die Bohrungen der Gewindeplatte mit den Bohrungen des Trägers und den Bohrungen der Sammelschiene fluchten.

Vorzugsweise ist die Gewindeplatte ebenfalls in dem Anschlussbereich vorgesehen, um diesen zu stützen, zu stabilisieren und/oder eine Befestigungsmöglichkeit bereitzustellen. Zudem ermöglicht eine derartige Anordnung, dass Befestigungsmittel, wie beispielsweise Schrauben oder Bolzen, mit der Kontaktierungsvorrichtung verbunden werden können. Insbesondere ist es nun nicht mehr nötig, direkt in der mindestens einen Sammelschiene oder dem mindestens einen Träger Gewindebohrungen vorzusehen, wodurch wiederum Kosten eingespart werden können.

Gemäß einer vorteilhaften Weiterbildung der Erfindung sind die Anschlussfahnen der Vielzahl von elektrochemischen Zellen biegbar.

Dies bietet insbesondere den Vorteil, dass eine verhältnismäßig große Kontaktfläche zwischen den einzelnen Anschlussfahnen und der Kontaktierungsvorrichtung bzw. der mindestens einen Sammelschiene bereitgestellt wird. Somit wird ein sicheres und großflächiges Kontaktieren ermöglicht.

Gemäß einer vorteilhaften Weiterbildung der Erfindung weist das Zellenpaket Zellträger auf, um die Vielzahl von elektrochemischen Zellen aufzunehmen und stapelförmig anzuordnen.

Vorzugsweise sind hier jeweils zwei elektrochemischen Zellen einem Träger zugeordnet, das heißt, dass der Zellträger derart ausgebildet ist, dass er zwei elektrochemische Zellen aufnehmen kann.

Insgesamt ist dies auch für den Produktionsablauf äußerst vorteilhaft, da in einem vorhergehenden Arbeitsschritt bzw. an einer vorhergehenden Arbeitsstation die Zellträger vorbereitet werden können und mit einer, vorzugsweise zwei elektrochemischen Zellen bestückt werden können. Arbeitsabläufe können somit allgemein weiter vereinfacht und optimiert werden.

Zum anderen können die Zellträger derart ausgebildet sein, dass sie eine Vielzahl von Einrichtungen aufweisen, welche einen späteren Zusammenbau vereinfachen. In diesem Zusammenhang ist es beispielsweise möglich, dass ein unterer Bereich der Zellträger derart ausgebildet ist, dass die mindestens eine Kontaktierungsvorrichtung zumindest bereichsweise in ihn steckbar und/oder aufnehmbar ist. Derart lässt sich auch ein Anschlag für einen unteren Bereich der Kontaktierungsvorrichtung, das heißt für die Zinken, bereitstellen, womit eine exakte Positionierung der Kontaktierungsvorrichtung ermöglicht wird.

Des Weiteren können Zentrierungsvorrichtungen und/oder Einrastvorrichtungen vorgesehen sein, um den Zusammenbau zu vereinfachen und insbesondere um die Kontaktierungsvorrichtung einfach einzusetzen und/oder zu halten.

Gemäß einer vorteilhaften Weiterbildung der Erfindung weist das Zellenpaket zwei Endplatten auf, welche an beiden Enden der stapelförmig angeordneten elektrochemischen Zellen vorgesehen sind.

Die beiden Endplatten sind somit bei einer Verwendung von Zellträgern an die Zellträger angrenzend angeordnet und bilden ein vorderes, bzw. hinteres Ende des Zellenpakets aus.

Vorzugsweise sind die Endplatten und/oder Zellträger aus Kunststoff, insbesondere aus Acrylnitril-Butadien-Styrol, Polycarbonat, Polyamid, Polyvinylchlorid, Polyethylenterephthalat, Polyoxymethylen oder ein Copolymer hiervon hergestellt.

Gemäß einer vorteilhaften Weiterbildung der Erfindung weisen die Zellträger Bohrungen auf, wobei die Endplatten zugehörige Bohrungen aufweisen, welche fluchtend mit den Bohrungen der Zellträger angeordnet und ausgerichtet sind, wobei das Zellenpaket ferner eine Vielzahl von Stäben aufweist, welche durch die Bohrungen der Zellträger und der Endplatten führbar sind, um diese zu verbinden.

Insgesamt entsteht somit ein äußerst stabiler und modularer Aufbau des Zellenpakets. Auch hier ist es wiederum möglich, den Zusammenbau des Zellenpakets an einer separaten Arbeitsstation vorzusehen, um den Fertigungsablauf weiter zu optimieren. So kann beispielsweise an einer ersten Arbeitsstation ein zusammengebauter Zellträger mit jeweils mindestens einer Zelle, vorzugsweise zwei Zellen, zusammengebaut werden und an einer nachfolgenden zweiten Arbeitsstation können die Zellträger zusammen mit den Endplatten zu einem Zellenpaket verbunden werden, welches anschließend an eine dritte Arbeitsstation weitergegeben werden kann.

Vorzugsweise sind in jedem Zellträger und in jeder Endplatte vier Bohrungen vorgesehen, welche besonders bevorzugt an den beiden Seiten des Zellenpakets vorgesehen sind, von welchen sich die Anschlussfahnen der elektrochemischen Zellen nicht aus erstrecken; das heißt an einer Oberseite und einer Unterseite des Zellenpakets.

Die beschriebene Anordnung des Zellenpakets mit einer Vielzahl von Stäben ist auch deswegen vorteilhaft, da die Stäbe zusammen mit den Bohrungen eine Zentrierungsfunktion erfüllen.

Vorzugsweise weisen die Stäbe an ihren Endbereichen Gewinde auf, um Befestigungsmittel aufschrauben zu können.

Gemäß einer vorteilhaften Weiterbildung der Erfindung ist eine Schaumplatte jeweils zwischen einem äußeren, also einem vorderen und einem hinteren, Zellträger und einer der Endplatten vorgesehen.

Dadurch kann erreicht werden, dass ein Anpressdruck, welcher durch die Endplatten auf das Zellenpaket, bzw. die Zellträger wirkt, gleichmäßig verteilt wird. Zusätzlich besitzen die Schaumplatten eine Dämpfwirkung, wodurch das Zellenpaket und insbesondere die elektrochemischen Zellen vor Vibrationen und/oder Stößen geschützt werden können.

Die Befestigung der Schaumplatte erfolgt vorzugsweise über einen Klebstoff, wobei die Schaumplatten besonders bevorzugt an die Endplatten geklebt werden.

Gemäß einer vorteilhaften Weiterbildung der Erfindung weist das Energiespeichermodul ferner ein Modulgehäuse und einen Deckel auf.

Als Befestigungsmittel des Modulgehäuses und des Deckels bieten sich auch hier insbesondere Schrauben, Bolzen oder Nieten an. In diesem Zusammenhang werden vorzugsweise der Deckel und/oder das Modulgehäuse mit den Endplatten des Zellenstapels verbunden, welche zu diesem Zweck Bohrungen bzw. Gewindebohrungen aufweisen.

Am Deckel sind eine Vielzahl von Einrichtungen vorgesehen, beispielsweise Anschlüsse für im Energiespeichermodul benutzte Sensoren, Entlüftungseinrichtungen und Terminals zum Kontaktieren mit einem elektrischen Verbraucher. Die Terminals zum Kontaktieren mit einem elektrischen Verbraucher sind elektrisch mit dem Anschlussbereich bzw. den Anschlussbereichen der mindestens einen Sammelschiene verbunden.

Die eingangs genannte Aufgabe wird außerdem durch ein Verfahren zum Zusammenbau eines Energiespeichermoduls gemäß Anspruch 11 gelöst.

Dies stellt einen einfachen und vor allem schnellen Zusammenbau bereit, insbesondere dadurch dass die kammförmige Kontaktierungsvorrichtung auf Anschlussfahnen der elektrochemischen Zellen aufgeschoben oder aufgesteckt wird.

Gemäß einer vorteilhaften Weiterbildung der Erfindung weist das Verfahren ferner folgenden Schritt auf: Aufschieben mindestens einer zweiten Kontaktierungsvorrichtung auf flächig ausgebildete Anschlussfahnen auf einer zweiten Seite der beiden gegenüberliegenden Seiten des Zellenpakets, wobei die mindestens eine zweite Kontaktierungsvorrichtung im Wesentlichen kammförmig ausgebildet ist und eine Vielzahl von Zinken aufweist, welche derart ausgebildet und angeordnet ist, dass zwischen zwei benachbarten Zinken jeweils eine Anschlussfahne aufnehmbar oder aufgenommen ist.

Gemäß einer vorteilhaften Weiterbildung weisen die Anschlussfahnen eine Schutzfolie auf und das Verfahren zum Zusammenbau eines Energiespeichermoduls weist ferner folgenden Schritt auf: Entfernen der Schutzfolie von den Anschlussfahnen der Vielzahl von elektrochemischen Zellen.

Die Schutzfolie schützt die Anschlussfahnen beim Zusammenbau des Energiespeichermoduls. Insbesondere wird die Oberfläche der Anschlussfahnen von Oberflächenbeschädigungen, wie beispielsweise Kratzern, geschützt, um eine möglichst ebene Oberfläche der Anschlussfahnen aufrechtzuerhalten.

Zusätzlich kann durch die Schutzfolie ein ungewolltes Kontaktieren der Anschlussfahnen verhindert werden, wodurch auch die Arbeitssicherheit an der jeweiligen Arbeitsstation steigt.

Gemäß einer vorteilhaften Weiterbildung der Erfindung weist das Verfahren ferner folgenden Schritt auf: Biegen der Anschlussfahnen derart, dass die elektrochemischen Zellen mit der mindestens einen ersten und/oder der mindestens einen zweiten Kontaktierungsvorrichtung elektrisch verbindbar oder verbunden sind.

Dadurch, dass die Anschlussfahnen flächig ausgebildet sind, ergibt sich nach dem Biegen eine besonders große Kontaktfläche.

Gemäß einer vorteilhaften Weiterbildung der Erfindung weist das Zellenpaket Zellträger, um die Vielzahl von elektrochemischen Zellen aufzunehmen und stapelfömig anzuordnen, und zwei Endplatten auf, welche an beiden Enden der stapelfömig angeordneten elektrochemischen Zellen vorgesehen sind.

Gemäß einer vorteilhaften Weiterbildung weist das Verfahren ferner folgenden Schritt auf: Schweißen der Anschlussfahnen der Vielzahl von elektrochemischen Zellen an die mindestens eine erste und/oder die mindestens eine zweiten Kontaktierungsvorrichtung unter Verwendung eines Schweißwerkzeugs.

Dies ist insbesondere deswegen vorteilhaft, da durch das Schweißen innerhalb einer kurzen Zeitspanne eine große Kontakt- bzw. Verbindungsfläche zwischen den Anschlussfahnen und der Kontaktierungsvorrichtung geschaffen werden kann. Somit ist das Schweißen aufgrund der kurzen Bearbeitungszeit besonders gut bei automatisierten Fertigungsprozessen einsetzbar und gleichzeitig äußerst zuverlässig. Zudem kann auf weitere verbindende Bauteile, wie beispielsweise auf Schrauben, verzichtet werden und der Aufbau wird weiterhin vereinfacht. Auch ist der elektrische Widerstand bei einer Schweißverbindung deutlich geringer als bei einer Verbindung, welche beispielsweise durch Schrauben bereitgestellt wird.

Gemäß einer vorteilhaften Weiterbildung der Erfindung ist/sind das Schweißwerkzeug und/oder die Zellträger derart ausgebildet, dass das Schweißwerkzeug zumindest bereichsweise in den Zellträgern aufnehmbar oder in die Zellträger steckbar ist.

Selbstverständlich weisen die Zellträger in diesem Zusammenhang Einrichtungen auf, welche ein Aufnehmen oder ein Stecken des Schweißwerkzeuges vereinfachen oder ermöglichen. Eine entsprechende beispielhafte Einrichtung ist in Form eines Spalts gegeben.

Dadurch wird ein genaues Anordnen des Schweißwerkzeuges in Bezug auf die Kontaktierungsvorrichtung bzw. die Anschlussfahnen möglich. Dementsprechend können auch hier Fehler in der Produktion vermieden werden und die Kontaktierungsvorrichtung kann an vorgegebenen Stellen mit den Anschlussfahnen verschweißt werden.

Die Erfindung wird nachfolgend anhand von Ausführungsbeispielen unter Verwendung der beiliegenden Zeichnungen näher erläutert.

Es zeigen:
- FIG. 1: eine schematische Darstellung eines Fahrzeuges;
- FIG. 2: eine schematische Darstellung eines Zellenpakets gemäß der vorliegenden Erfindung;
- FIG. 3a: eine Explosionszeichnung einer Kontaktierungsvorrichtung gemäß der vorliegenden Erfindung;
- FIG. 3b: eine schematische Darstellung einer zusammengebauten Kontaktierungsvorrichtung gemäß FIG. 3a;
- FIG. 4a: eine schematische Darstellung eines Energiespeichermoduls gemäß der vorliegenden Erfindung in einem ersten Zustand;
- FIG. 4b: eine schematische Darstellung des Energiespeichermoduls gemäß FIG. 4a in einem zweiten Zustand; und
- FIG 4c: eine schematische Darstellung des Energiespeichermoduls gemäß FIG. 4a in einem dritten Zustand.

Nachfolgend wird das erfindungsgemäße Energiespeichermodul unter Bezugnahme auf die Darstellungen in den Figuren genauer beschrieben. Gleiche oder gleich wirkende Elemente und Funktionen sind hierbei mit demselben oder ähnlichen Bezugszeichen versehen.

Im Folgenden werden das Zellenpaket, die Kontaktierungsvorrichtung und das Energiespeichermodul derart beschrieben, dass relative Begriffe auf den Einbauzustand des Energiespeichermoduls bezogen sind. So bedeutet beispielsweise "in einem oberen Bereich" in einem im eingebauten Zustand gesehenen oberen Bereich und "in einem unteren Bereich" in einem im eingebauten Zustand gesehenen unteren Bereich.

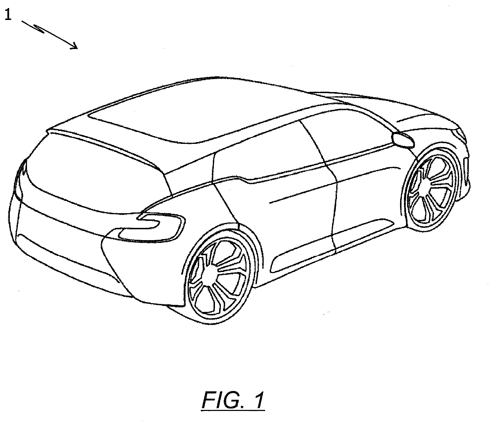

FIG. 1 zeigt eine schematische Darstellung eines Fahrzeuges 1. Ein Energiespeichermodul 10 kann hierbei insbesondere in einem in Fahrtrichtung vorderen Bereich des Fahrzeuges 1 angeordnet sein.

Bei dem Fahrzeug 1 kann es sich um ein Luft- oder Wasserfahrzeug, ein spurgeführtes Fahrzeug, ein Geländefahrzeug, oder bevorzugt ein Straßenfahrzeug handeln, wobei unter Straßenfahrzeug ein Personenkraftwagen, ein Lastkraftwagen, ein Bus oder ein Wohnmobil verstanden werden kann.

Das Fahrzeug 1 wird durch eine Antriebseinheit angetrieben. Bei der Antriebseinheit kann es sich um einen Verbrennungsmotor, einen Elektromotor oder eine Kombination hiervon handeln. Ein Fahrzeug 1, welches sowohl einen Elektromotor als auch einen Verbrennungsmotor aufweist, wird als Hybridfahrzeug bezeichnet. Insbesondere bei Hybridfahrzeugen und Fahrzeugen mit Verbrennungsmotor kann das Energiespeichermodul 10 als Starterbatterie vorgesehen sein.

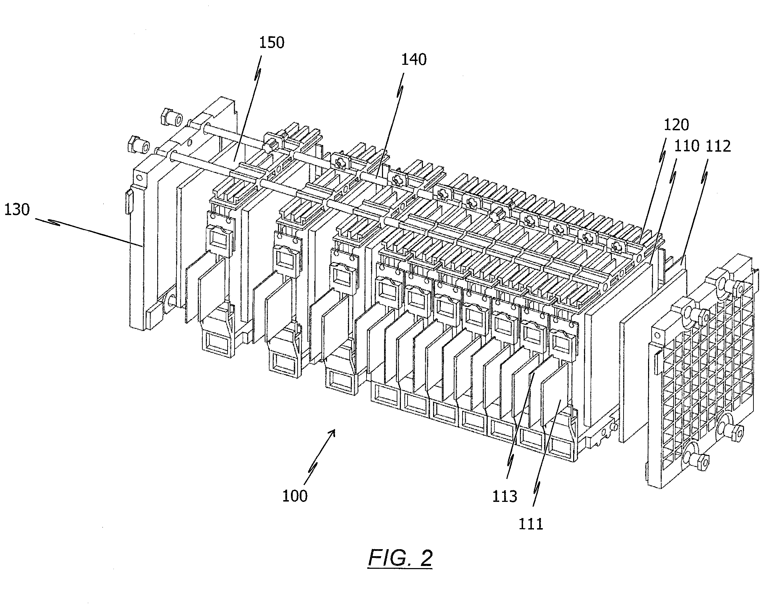

FIG. 2 zeigt ein Zellenpaket 100 mit einer Vielzahl von elektrochemischen Zellen 110 zur Verwendung in dem erfindungsgemäßen Energiespeichermodul 10. Wie in FIG. 2 zu sehen, sind die Vielzahl von elektrochemischen Zellen 110 in Zellträgern 120 angeordnet, wobei ein Zellträger 120 zwei elektrochemischen Zellen 110 aufnimmt. Die elektrochemischen Zellen 110 bzw. die Zellträger 120 sind hierbei derart angeordnet, dass sich erste flächig ausgebildete Anschlussfahnen 111 und zweite flächig ausgebildete Anschlussfahnen 112 der elektrochemischen Zellen 110 von zwei gegenüberliegenden Seiten des Zellenpakets 100 aus erstrecken. Insbesondere sind die beiden Seiten die linke und rechte Seite des Zellenpakets.

An einer oberen und einer unteren Seite sind Stäbe 140 vorgesehen, welche durch Bohrungen in den Zellträgern 120 aufgenommen, bzw. durch sie hindurch geführt sind. Selbstverständlich ist es in diesem Zusammenhang denkbar, dass die Bohrungen bzw. Stäbe 140 lediglich an der oberen oder unteren Seite des Zellenpakets 100 vorgesehen sind.

An einer vorderen und an einer hinteren Seite des Zellenpakets 100 sind Endplatten 130 vorgesehen, welche einen Abschluss des Zellenpakets 100 ausbilden. Die Endplatten 130 weisen zugehörige Bohrungen auf, durch welche die Stäbe 140 aufgenommen, bzw. hindurchgeführt werden können. Zwischen den Endplatten 130 und einem ersten bzw. letzten Zellträger 120 sind Schaumplatten 150 angeordnet.

Wie in FIG. 2 ebenfalls zu erkennen, weisen die Endplatten 130 jeweils eine Ausnehmung auf, welche in ihrer Form und Größe derart ausgebildet ist, die Schaumplatte 150 zumindest bereichsweise aufzunehmen. Vorzugsweise ist es möglich die Ausnehmung und/oder die Schaumplatte 150 mit einer Klebevorrichtung, wie beispielsweise Klebestreifen, vorzusehen.

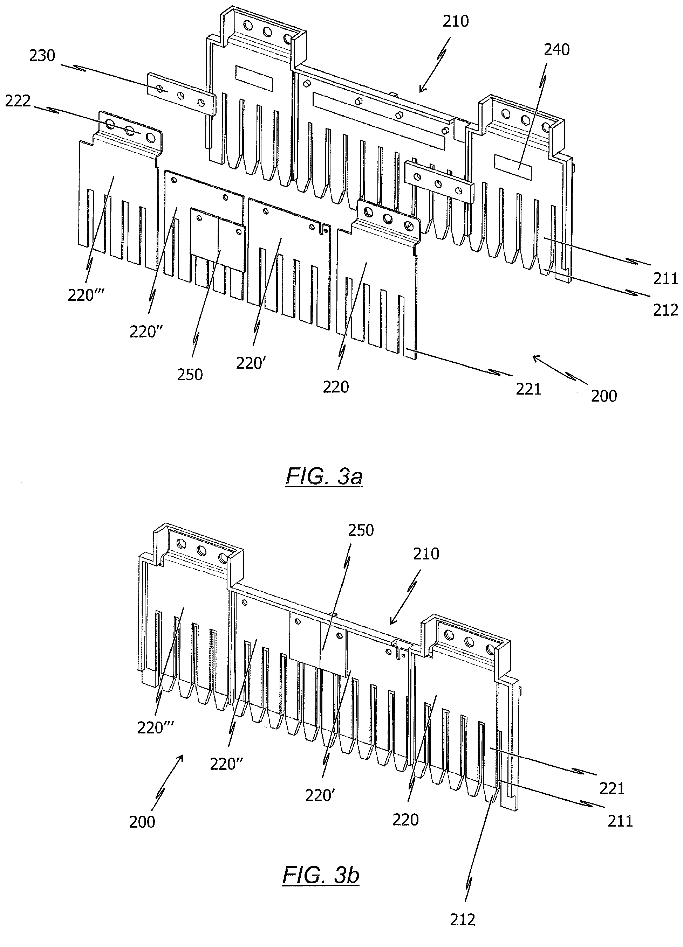

FIG. 3a zeigt eine Explosionszeichnung einer erfindungsgemäßen Kontaktierungsvorrichtung 200. Die Kontaktierungsvorrichtung 200 weist einen Träger 210 und vier Sammelschienen 220, 220', 220" und 220‴ auf. Selbstverständlich ist es in diesem Zusammenhang denkbar, dass eine andere Anzahl von Sammelschienen 220 vorgesehen ist.

Der Träger 210 weist eine Vielzahl von Zinken 211 auf, welche angefaste Endbereiche 212 aufweisen. Zudem ist zu erkennen, dass der Träger 210 Zentrierungsvorrichtungen in Form von Noppen oder Stiften aufweist, welche zumindest in zugehörige Bohrungen in den beiden mittleren Sammelschienen 220' 220" aufgenommen werden können.

Der Träger 210 weist drei Bereiche auf, welche durch Stege abgetrennt sind, und somit drei Bereiche zum festgelegten Aufnehmen der Sammelschienen 220, 220', 220" und 220‴ bereitstellt. Dabei ist eine vordere Sammelschiene 220 in einem vorderen Bereich aufgenommen, die beiden mittleren Sammelschienen 220' und 220‴ in einem mittlere Bereich aufgenommen und eine hintere Sammelschiene 220‴ in einen hinteren Bereich aufgenommen. Relative Angaben, wie "vordere" und "hintere", beziehen sich auch hier auf einen Einbauzustand des Zellenpakets bzw. des Energiemoduls.

Der vordere Bereich und der hintere Bereich des Trägers 210 weisen Bereiche auf, um einen Anschlussbereich 223 der vorderen und hinteren Sammelschiene 220 und 220‴ aufnehmen zu können.

Zudem kann jeder der Bereiche des Trägers 210 einen Klebestreifen 240 aufweisen, um die Sammelschienen 220, 220', 220" und 220‴ mit dem Träger 210 verbinden, das heißt an ihn befestigen zu können.

Die in FIG. 3a gezeigten Sammelschienen 220 weisen jeweils eine Vielzahl von Zinken 221 auf. Zudem sind die Sammelschienen 220 aus unterschiedlichen Materialien gefertigt. So ist beispielsweise die vordere Sammelschiene 220 aus Aluminium, die angrenzende mittlere Sammelschiene 220' aus Kupfer, die andere mittlere Sammelschiene 220" aus Aluminium und die hintere Sammelschiene 220‴ aus Kupfer gebildet.

Um die mittleren beiden Sammelschienen 220' und 220" in einem vorherigen Arbeitsschritt verbinden zu können, ist vorzugsweise eine Bimetallplatte 250 vorgesehen. Die beiden Materialien Aluminium und Kupfer lassen sich nur sehr aufwendig direkt verschweißen, daher wird die Bimetallplatte 250 verwendet, welche eine erste Seite aus Aluminium und eine zweite Seite aus Kupfer aufweist. Anstatt die Sammelschienen 220' und 220" direkt zu verschweißen, wird somit die Seite der Bimetallplatte 250 aus Aluminium mit der Sammelschiene 220" verschweißt. Entsprechend wird die Seite der Bimetallplatte 250, welche aus Kupfer ausgebildet ist, mit der Sammelschiene 220' verschweißt.

Zwischen den Sammelschienen 220 und dem Träger 210 sind Gewindeplatten 230 vorgesehen. Insbesondere ist der Bereich des Trägers 210, welcher die Anschlussbereiche 223 der Sammelschienen 220 und 220‴ aufnimmt auch dazu ausgebildet, die Gewindeplatte 230 aufnehmen zu können.

FIG. 3b zeigt die Kontaktierungsvorrichtung 200 gemäß FIG. 3a in einem zusammengebauten Zustand. Wie zu erkennen, sind die Sammelschienen 220, 220', 220", 220‴ in dem Träger 210 aufgenommen. Insbesondere ist auch zu erkennen, dass die Zinken 211 des Trägers 210 länger ausgebildet sind als die Zinken 221 der Sammelschienen 220, 220', 220" und 220"'. Dies bietet den Vorteil, dass lediglich die Zinken 211 des Trägers 210 angefaste Endbereiche 212 aufweisen müssen. Dementsprechend sind die Sammelschienen 220, 220', 220" und 220‴ bzw. deren Zinken 221 einfacher herzustellen.

Zudem ist zu erkennen, dass die Stege des Trägers zwischen dem vorderen und dem mittleren sowie zwischen dem mittleren und dem hinteren Bereich auch dazu dienen, die Sammelschienen 220 und 220' bzw. die Sammelschienen 220" und 220 ‴ elektrisch voneinander zu isolieren.

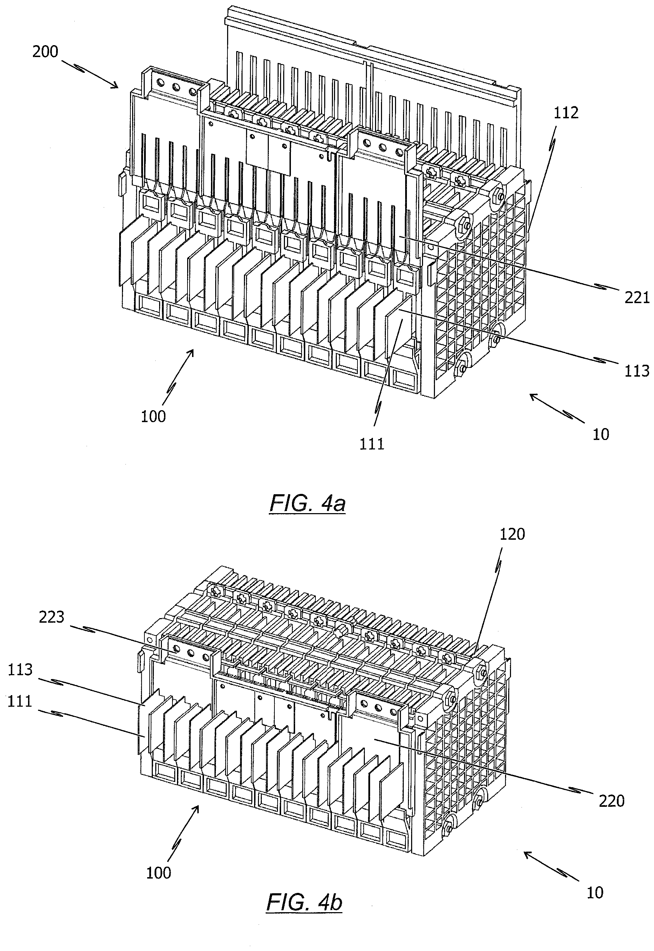

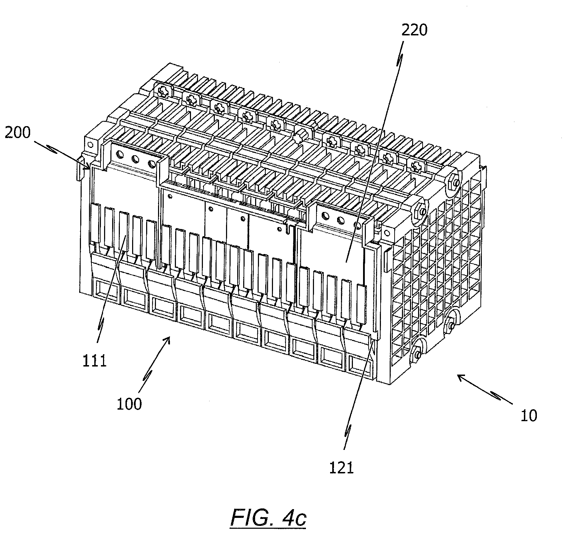

Die FIGS. 4a, 4b und 4c zeigen das Energiespeichermodul 10 in unterschiedlichen Fertigungsschritten (Zuständen).

So zeigt die FIG. 4a das Zellenpaket 100 und zwei Kontaktierungsvorrichtungen 200 vor einem Aufschieben der Kontaktierungsvorrichtungen 200.

Die FIG. 4b zeigt das Zellenpaket 100 und die Kontaktierungsvorrichtungen 200 in einem aufgeschobenen bzw. aufgesteckten Zustand. Dabei ist zu erkennen, dass die beiden Kontaktierungsvorrichtungen 200 nicht identisch ausgebildet sind bzw. sein müssen. Insbesondere ist zu erkennen, dass lediglich eine der Kontaktierungsvorrichtungen 200 die Anschlussbereiche 223 der Sammelschiene 220 und 220‴ aufweist. Dementsprechend ist der Träger 210 entweder mit oder ohne Bereiche zum Aufnehmen der Anschlussbereiche 223 ausgebildet.

In den FIG. 4a und FIG. 4b weisen die ersten und zweiten flächig ausgebildeten Anschlussfahnen 111 und 112 noch eine Schutzfolie 113 auf, welche in einem Zwischenschritt zwischen FIG. 4b und FIG. 4c entfernt wird. Die Schutzfolie 113 dient insbesondere zum Schutz der Oberfläche der Anschlussfahnen 111 und 112.

In FIG. 4c ist das Zellenpaket 100 und die Kontaktierungsvorrichtung 200 zu erkennen, wobei die Anschlussfahnen 111 und 112 derart gebogen wurden, dass sie einen elektrischen Kontakt zwischen den Sammelschienen 220, 220', 220" und 220‴ und den elektrochemischen Zellen 110 ermöglichen. Insbesondere ist auch zu erkennen, dass Kontaktflächen zwischen den Anschlussfahnen 111 und 112 und den Sammelschienen 220, 220', 220" und 220‴ durch die flächige Ausbildung der Anschlussfahnen 111, 112 relativ groß sind.

In FIG. 4c ist zudem zu erkennen, dass ein unterer Bereich der Zellträger 120 ausgebildet ist, um einen Spalt 121 auszubilden, in welchem in einem folgenden Arbeitsschritt ein Schweißwerkzeug einsetzbar ist.

Das Zellenpaket 100 und dort insbesondere die Endplatten 130 weisen zudem, wie in den FIG. 4a bis FIG. 4c zu erkennen ist, Zentrierungseinrichtungen auf. Diese sind insbesondere an den Endplatten 130 in Form von sich zu den Seiten erstreckenden Vorsprüngen zu erkennen.

Auch die Kontaktierungsvorrichtungen 200, insbesondere der Träger 210 weist Zentrierungseinrichtungen auf, welche in FIG. 4a beispielsweise in Form von sich mit den Zinken des Trägers parallel erstreckenden Streben dargestellt sind.

Des Weiteren weist der Träger 210, wie ebenfalls in FIG. 4a zu erkennen, in einem oberen Bereich eine Art Schiene auf, welche sich in oberen Bereichen der Zellträger 120 befestigen lässt. Dabei handelt es sich insbesondere um eine Rastvorrichtung.

Bei einer Betrachtung der FIG. 4b ist zudem zu erkennen, dass der Träger 210 in einem unteren Bereich der Zellträger 120 aufnehmbar ist. Dieser untere Bereich kann gleichzeitig einen Anschlag ausbilden, damit die Kontaktierungsvorrichtungen 200 nur bis zu einer bestimmten Position auf die Anschlussfahnen 111 und 112 aufschiebbar sind. Dabei ist der untere Bereich der Zellträger insbesondere der gleiche Bereich, in welchem der Spalt 121 ausgebildet ist.

### Bezugszeichenliste

- 1: Fahrzeug
- 10: Energiespeichermodul
- 100: Zellenpaket
- 110: Elektrochemische Zelle
- 111: Erste flächig ausgebildete Anschlussfahne
- 112: Zweite flächig ausgebildete Anschlussfahne
- 113: Schutzfolie
- 120: Zellträger
- 121: Spalt des Zellträgers
- 130: Endplatte
- 140: Stäbe
- 150: Schaumplatte
- 200: Kontaktierungsvorrichtung
- 210: Träger
- 211: Zinken des Trägers
- 212: Angefaster Endbereich der Zinken
- 220: Sammelschiene
- 220': Sammelschiene
- 220": Sammelschiene
- 220‴: Sammelschiene
- 212: Zinken der Sammelschiene
- 223: Anschlussbereich
- 230: Gewindeplatte
- 240: Klebestreifen
- 250: Bimetallplatte

### Bezugszeichenliste

- 1: Fahrzeug
- 10: Energiespeichermodul
- 100: Zellenpaket
- 110: Elektrochemische Zelle
- 111: Erste flächig ausgebildete Anschlussfahne
- 112: Zweite flächig ausgebildete Anschlussfahne
- 113: Schutzfolie
- 120: Zellträger
- 121: Spalt des Zellträgers
- 130: Endplatte
- 140: Stäbe
- 150: Schaumplatte
- 200: Kontaktierungsvorrichtung
- 210: Träger
- 211: Zinken des Trägers
- 212: Angefaster Endbereich der Zinken
- 220: Sammelschiene
- 220': Sammelschiene
- 220": Sammelschiene
- 220‴: Sammelschiene
- 212: Zinken der Sammelschiene
- 223: Anschlussbereich
- 230: Gewindeplatte
- 240: Klebestreifen
- 250: Bimetallplatte

## Patentansprüche

1. Energiespeichermodul (10), welches Folgendes aufweist:
- eine Vielzahl elektrochemischer Zellen (110) zum Speichern von elektrischer Energie; und
- mindestens eine Kontaktierungsvorrichtung (200) zum elektrischen Kontaktieren der Vielzahl elektrochemischer Zellen (110),
wobei jede der Vielzahl elektrochemischer Zellen (110) eine erste flächig ausgebildete Anschlussfahne (111) zum Kontaktieren einer ersten Elektrode der jeweiligen elektrochemischen Zelle (110) und eine zweite flächig ausgebildete Anschlussfahne (112) zum Kontaktieren einer zweiten Elektrode der jeweiligen elektrochemischen Zelle (110) aufweist, wobei die Vielzahl von elektrochemischen Zellen (110) stapelförmig angeordnet ist und derart ein Zellenpaket (100) ausbildet, dass die ersten und zweiten flächig ausgebildeten Anschlussfahnen (111, 112) sich zumindest im Wesentlichen senkrecht von zwei gegenüberliegenden Seiten des Zellenpakets (100) aus erstrecken,
wobei die mindestens eine Kontaktierungsvorrichtung (200) im Wesentlichen kammförmig ausgebildet ist und eine Vielzahl von Zinken (211, 221) aufweist, welche derart ausgebildet und angeordnet sind, dass zwischen zwei benachbarten Zinken (211, 221) eine erste oder zweite Anschlussfahne (111,112) aufnehmbar oder aufgenommen ist
**dadurch gekennzeichnet, dass**
die mindestens eine Kontaktierungsvorrichtung (200) mindestens eine Sammelschiene (220) und mindestens einen Träger (210) aufweist, wobei die mindestens eine Sammelschiene (220) und der mindestens eine Träger (210) kammförmig ausgebildet sind und die Vielzahl von Zinken (211, 221) aufweisen.

2. Energiespeichermodul (10) nach Anspruch 1,
wobei das Energiespeichermodul (10) zwei Kontaktierungsvorrichtungen (200) aufweist, wobei eine erste der beiden Kontaktierungsvorrichtungen (200) Anschlussfahnen (111, 112) auf einer ersten Seite der beiden gegenüberliegenden Seiten des Zellenpakets (100) kontaktiert und wobei eine zweite der beiden Kontaktierungsvorrichtungen (200) Anschlussfahnen (111, 112) auf einer zweiten Seite der beiden gegenüberliegenden Seiten des Zellenpakets (100) kontaktiert.

3. Energiespeichermodul (10) nach Anspruch 1 oder 2,
wobei jede der ersten und zweiten flächig ausgebildeten Anschlussfahnen (111, 112) jeweils zwischen zwei benachbarten Zinken (211, 221) der mindestens einen Kontaktierungsvorrichtung (200) aufgenommen ist, und/oder
wobei die mindestens eine Sammelschiene (220) in dem mindestens einen Träger (210) aufnehmbar bzw. aufgenommen und/oder an ihm befestigbar bzw. befestigt ist, und/oder
wobei die mindestens eine Kontaktierungsvorrichtung (200) eine Vielzahl von Sammelschienen (220, 220', 220", 220‴) aufweist und wobei die Vielzahl von Sammelschienen (220, 220', 220", 220‴) eine erste Vielzahl von Sammelschienen (220, 220") aus einem ersten Material und eine zweite Vielzahl von Sammelschienen (220', 220‴) aus einem zweiten Material aufweist, wobei das erste Material sich von dem zweiten Material unterscheidet, und/oder
wobei der mindestens eine Träger (210) und/oder die mindestens eine Sammelschiene (220) Zentrierungsvorrichtungen aufweisen, und/oder wobei die mindestens eine Sammelschiene (220) einen Anschlussbereich (223) zum elektrischen Kontaktieren eines elektrischen Verbrauchers aufweist.

4. Energiespeichermodul (10) nach einem der Ansprüche 1 bis 3,
wobei die Zinken (211) des mindestens einen Trägers (210) und/oder die Zinken (221) der mindestens einen Sammelschiene (220) angefaste Endbereiche (212) aufweisen,
wobei vorzugsweise:
- die Zinken (211) des mindestens einen Trägers (210) angefaste Endbereiche (212) aufweisen, und
- sich die Zinken (221) der mindestens einen Sammelschiene (220) nicht bis zu dem angefasten Endbereich (212) der Zinken (211) des mindestens einen Trägers (210) erstrecken, wenn die mindestens eine Sammelschiene (220) in dem mindestens einen Träger (210) aufgenommen und/oder an ihm befestigt ist.

5. Energiespeichermodul (10) nach einem der Ansprüche 1 bis 4,
wobei der mindestens eine Träger (210) eine Vielzahl von Bohrungen aufweist und wobei die mindestens eine Sammelschiene (220) eine Vielzahl zugehöriger Bohrungen aufweist, wobei die Bohrungen des Trägers (210) mit den Bohrungen der Sammelschiene (220) fluchten, wenn die mindestens eine Sammelschiene (220) in dem Träger (210) aufgenommen und/oder an ihm befestigt ist,
wobei eine Gewindeplatte (230) mit einer Vielzahl von Bohrungen vorzugsweise derart zwischen dem mindestens einen Träger (210) und der mindestens einen Sammelschiene (220) angeordneten und ausgerichtet ist, dass die Bohrungen der Gewindeplatte (230) mit den Bohrungen des Trägers (210) und den Bohrungen der Sammelschiene (220) fluchten.

6. Energiespeichermodul (10) nach einem der Ansprüche 1 bis 5,
wobei die Anschlussfahnen (111, 112) der Vielzahl von elektrochemischen Zellen (110) biegbar sind, und/oder
wobei das Energiespeichermodul (10) ferner ein Modulgehäuse und einen Deckel aufweist.

7. Energiespeichermodul (10) nach einem der Ansprüche 1 bis 6,
wobei das Zellenpaket (100) Zellträger (120) aufweist, um die Vielzahl von elektrochemischen Zellen (110) aufzunehmen und stapelförmig anzuordnen.

8. Energiespeichermodul (10) nach einem der Ansprüche 1 bis 7,
wobei das Zellenpaket (100) zwei Endplatten (130) aufweist, welche an beiden Enden der stapelförmig angeordneten elektrochemischen Zellen (110) vorgesehen sind.

9. Energiespeichermodul (10) nach Anspruch 7 oder 8,
wobei die Zellträger (120) Bohrungen aufweisen und wobei die Endplatten (130) zugehörigen Bohrungen aufweisen, welche fluchtend mit den Bohrungen der Zellträger (120) angeordnet und ausgerichtet sind, wobei das Zellenpaket (100) ferner eine Vielzahl von Stäben (140) aufweist, welche durch die Bohrungen der Zellträger (120) und der Endplatten (130) führbar sind, um diese zu verbinden.

10. Energiespeichermodul nach Anspruch 8 oder 9,
wobei eine Schaumplatte (150) jeweils zwischen einem äußeren Zellträger (120) und einer der Endplatten (130) vorgesehen ist.

11. Verfahren zum Zusammenbau eines Energiespeichermoduls (10),
wobei das Verfahren folgende Schritte aufweist:
- stapelförmiges Anordnen einer Vielzahl von elektrochemischen Zellen (110) zu einem Zellenpaket (100), wobei jede der Vielzahl von elektrochemischen Zellen (110) eine erste flächig ausgebildete Anschlussfahne (111) zum Kontaktieren einer ersten Elektrode der jeweiligen elektrochemischen Zelle (110) und eine zweite flächig ausgebildete Anschlussfahne (112) zum Kontaktieren einer zweiten Elektrode der jeweiligen elektrochemischen Zelle (110) aufweist und wobei das Zellenpaket (100) derart ausgebildet ist, dass die ersten und zweiten flächig ausgebildeten Anschlussfahnen (111, 112) sich zumindest im Wesentlichen senkrecht von zwei gegenüberliegenden Seiten des Zellenpakets (100) aus erstrecken;
- Aufschieben mindestens einer ersten Kontaktierungsvorrichtung (200) auf flächig ausgebildete Anschlussfahnen (111, 112) auf einer ersten Seite der beiden gegenüberliegenden Seiten des Zellenpakets (100), wobei die mindestens eine erste Kontaktierungsvorrichtung (200) im Wesentlichen kammförmig ausgebildet ist und eine Vielzahl von Zinken (211, 221) aufweist, welche derart ausgebildet und angeordnet ist,
dass zwischen zwei benachbarten Zinken (211, 221) jeweils eine Anschlussfahne (111, 112) aufnehmbar oder aufgenommen ist,
**dadurch gekennzeichnet, dass**
die mindestens eine erste und/oder die mindestens eine zweite Kontaktierungsvorrichtung (200) mindestens eine Sammelschiene (220) und mindestens einen Träger (210) aufweist, wobei die mindestens eine Sammelschiene (220) und der mindestens eine Träger (210) kammförmig ausgebildet sind und eine Vielzahl von Zinken (211, 221) aufweisen.

12. Verfahren nach Anspruch 11,
wobei das Verfahren ferner folgenden Schritt aufweist:
- Aufschieben mindestens einer zweiten Kontaktierungsvorrichtung (200) auf flächig ausgebildete Anschlussfahnen (111, 112) auf einer zweiten Seite der beiden gegenüberliegenden Seiten des Zellenpakets (100), wobei die mindestens eine zweite Kontaktierungsvorrichtung (200) im Wesentlichen kammförmig ausgebildet ist und eine Vielzahl von Zinken (211, 221) aufweist, welche derart ausgebildet und angeordnet ist, dass zwischen zwei benachbarten Zinken (211, 221) jeweils eine Anschlussfahne (111, 112) aufnehmbar oder aufgenommen ist, und/oder
wobei die Anschlussfahnen (111, 112) eine Schutzfolie (113) aufweisen und wobei das Verfahren ferner folgende(n) Schritt(e) aufweist:
- Entfernen der Schutzfolie (113) von den Anschlussfahnen (111, 112) der Vielzahl von elektrochemischen Zellen (110), und/oder
- Biegen der Anschlussfahnen (111, 112) derart, dass die elektrochemischen Zellen (110) mit der mindestens einen ersten und/oder der mindestens einen zweiten Kontaktierungsvorrichtung (200) elektrisch verbindbar oder verbunden sind.

13. Verfahren nach Anspruch 11 oder 12,
wobei das Zellenpaket (100) Zellträger (120), um die Vielzahl von elektrochemischen Zellen (110) aufzunehmen und stapelförmig anzuordnen, und zwei Endplatten (130) aufweist, welche an beiden Enden der stapelförmig angeordneten elektrochemischen Zellen (110) vorgesehen sind.

14. Verfahren nach einem der Ansprüche 11 bis 13,
wobei das Verfahren ferner folgenden Schritt aufweist:
- Schweißen der Anschlussfahnen (111, 112) der Vielzahl von elektrochemischen Zellen (110) an die mindestens eine erste und/oder mindestens eine zweite Kontaktierungsvorrichtung (200) unter Verwendung eines Schweißwerkzeugs.

15. Verfahren nach Anspruch 13 oder Anspruch 14,
wobei das Schweißwerkzeug und/oder die Zellträger (120) derart ausgebildet sind, dass das Schweißwerkzeug zumindest bereichsweise in den Zellträgern (120) aufnehmbar und/oder in die Zellträger (120) steckbar ist.

## Claims

1. Energy storage module (10), which has the following:
- a multiplicity of electrochemical cells (110) for storing electrical energy; and
- at least one contacting device (200) for electrically contacting the multiplicity of electrochemical cells (110),
wherein each of the multiplicity of electrochemical cells (110) has a first flat connection lug (111) for contacting a first electrode of the respective electrochemical cell (110) and a second flat connection lug (112) for contacting a second electrode of the respective electrochemical cell (110), wherein the multiplicity of electrochemical cells (110) is arranged in a stacked formation and forms a cell pack (100) in such a way that the first and second flat connection lugs (111, 112) extend from two opposite sides of the cell pack (100) in an at least substantially perpendicular manner, wherein the at least one contacting device (200) is substantially comb-shaped and has a multiplicity of prongs (211, 221), which are formed and arranged in such a way that a first or second connection lug (111, 112) can be received or is received between two adjacent prongs (211, 221),
**characterized in that**
the at least one contacting device (200) has at least one busbar (220) and at least one carrier (210), wherein the at least one busbar (220) and the at least one carrier (210) are comb-shaped and have the multiplicity of prongs (211, 221).

2. Energy storage module (10) according to Claim 1,
wherein the energy storage module (10) has two contacting devices (200), wherein a first of the two contacting devices (200) contacts connection lugs (111, 112) on a first side of the two opposite sides of the cell pack (100), and wherein a second of the two contacting devices (200) contacts connection lugs (111, 112) on a second side of the two opposite sides of the cell pack (100).

3. Energy storage module (10) according to Claim 1 or 2,
wherein each of the first and second flat connection lugs (111, 112) is received between two adjacent prongs (211, 221) of the at least one contacting device (200) in each case, and/or
wherein the at least one busbar (220) can be received or is received in the at least one carrier (210) and/or can be secured or is secured to it, and or wherein the at least one contacting device (200) has a multiplicity of busbars (220, 220', 220", 220‴) and wherein the multiplicity of busbars (220, 220', 220", 220"') has a first multiplicity of busbars (220, 220") composed of a first material and a second multiplicity of busbars (220', 220‴) composed of a second material, wherein the first material differs from the second material, and/or
wherein the at least one carrier (210) and/or the at least one busbar (220) have/has centring devices, and/or
wherein the at least one busbar (220) has a connection region (223) for electrically contacting an electrical load.

4. Energy storage module (10) according to any of Claims 1 to 3,
wherein the prongs (211) of the at least one carrier (210) and/or the prongs (221) of the at least one busbar (220) have chamfered end regions (212),
wherein preferably:
- the prongs (211) of the at least one carrier (210) have chamfered end regions (212), and
- the prongs (221) of the at least one busbar (220) do not extend as far as the chamfered end region (212) of the prongs (211) of the at least one carrier (210) when the at least one busbar (220) is received in the at least one carrier (210) and/or is secured to it.

5. Energy storage module (10) according to any of Claims 1 to 4,
wherein the at least one carrier (210) has a multiplicity of holes and
wherein the at least one busbar (220) has a multiplicity of associated holes, wherein the holes in the carrier (210) are in alignment with the holes in the busbar (220) when the at least one busbar (220) is received in the carrier (210) and/or is secured to it,
wherein a threaded plate (230) having a multiplicity of holes is arranged and aligned between the at least one carrier (210) and the at least one busbar (220) in such a way that the holes in the threaded plate (230) are in alignment with the holes in the carrier (210) and the holes in the busbar (220).

6. Energy storage module (10) according to any of Claims 1 to 5,
wherein the connection lugs (111, 112) of the multiplicity of electrochemical cells (110) are flexible, and/or
wherein the energy storage module (10) further has a module housing and a cover.

7. Energy storage moule (10) according to any of Claims 1 to 6,
wherein the cell pack (100) has cell carriers (120) in order to receive the multiplicity of electrochemical cells (110) and arrange them in a stacked formation.

8. Energy storage module (10) according to any of Claims 1 to 7,
wherein the cell pack (100) has two end plates (130), which are provided at both ends of the electrochemical cells (110) arranged in a stacked formation.

9. Energy storage module (10) according to Claims 7 or 8,
wherein the cell carriers (120) have holes and wherein the end plates (130) have associated holes, which are arranged and oriented in alignment with the holes in the cell carriers (120), wherein the cell pack (100) further has a multiplicity of rods (140), which can be passed through the holes in the cell carriers (120) and in the end plates (130) in order to connect the cell carriers and end plates.

10. Energy storage module according to Claim 8 or 9,
wherein a foam plate (150) is in each case provided between an outer cell carrier (120) and one of the end plates (130).

11. Method for assembling an energy storage module (10),
wherein the method has the following steps:
- arranging a multiplicity of electrochemical cells (110) in a stacked formation to form a cell pack (100), wherein each of the multiplicity of electrochemical cells (110) has a first flat connection lug (111) for contacting a first electrode of the respective electrochemical cell (110) and a second flat connection lug (112) for contacting a second electrode of the respective electrochemical cell (110), and wherein the cell pack (100) is designed in such a way that the first and second flat connection lugs (111, 112) extend from two opposite sides of the cell pack (100) in an at least substantially perpendicular manner;
- pushing at least one first contacting device (200) onto flat connection lugs (111, 112) on a first side of the two opposite sides of the cell pack (100), wherein the at least one first contacting device (200) is substantially comb-shaped and has a multiplicity of prongs (211, 221), which are designed and arranged in such a way that a respective connection lug (111, 112) can be received or is received between two adjacent prongs (211, 221),
**characterized in that**
the at least one first and/or the at least one second contacting device (200) has at least one busbar (220) and at least one carrier (210), wherein the at least one busbar (220) and the at least one carrier (210) are comb-shaped and have a multiplicity of prongs (211, 221).

12. Method according to Claim 11,
wherein the method further has the following step:
- pushing at least one second contacting device (200) onto flat connection lugs (111, 112) on a second side of the two opposite sides of the cell pack (100), wherein the at least one second contacting device (200) is substantially comb-shaped and has a multiplicity of prongs (211, 221), which are designed and arranged in such a way that a respective connection lug (111, 112) can be received or is received between two adjacent prongs (211, 221), and/or
wherein the connection lugs (111, 112) have a protective film (113) and
wherein the method further has the following steps:
- removing the protective film (113) from the connection lugs (111, 112) of the multiplicity of electrochemical cells (110), and/or
- bending the connection lugs (111, 112) in such a way that the electrochemical cells (110) can be electrically connected or are electrically connected to the at least one first and/or the at least one second contacting device (200).

13. Method according to Claim 11 or 12,
wherein the cell pack (100) has cell carriers (120) in order to receive the multiplicity of electrochemical cells (110) and to arrange them in a stacked formation and has two end plates (130), which are provided at both ends of the electrochemical cells (110) arranged in a stacked formation.

14. Method according to any of Claims 11 to 13,
wherein the method further has the following step:
- welding the connection lugs (111, 112) of the multiplicity of electrochemical cells (110) to the at least one first and/or at least one second contacting device (200) using a welding tool.

15. Method according to Claim 13 or Claim 14,
wherein the welding tool and/or the cell carriers (120) are/is designed in such a way that the welding tool can be received at least partially in the cell carriers (120) and/or can be inserted at least partially into the cell carriers (120).

## Revendications

1. Module de stockage d'énergie (10), présentant ce qui suit :
- une pluralité de cellules électrochimiques (110) pour stocker de l'énergie électrique ; et
- au moins un dispositif de mise en contact (200) pour la mise en contact électrique de la pluralité de cellules électrochimiques (110),
dans lequel chacune de la pluralité de cellules électrochimiques (110) présente une première patte de connexion (111) réalisée de manière plane pour mettre en contact une première électrode de la cellule électrochimique (110) respective et une deuxième patte de connexion (112) réalisée de manière plane pour mettre en contact une deuxième électrode de la cellule électrochimique (110) respective, dans lequel la pluralité de cellules électrochimiques (110) est disposée en forme de pile et réalise un paquet de cellules (100) de telle sorte que la première et la deuxième patte de connexion (111, 112) réalisées de manière plane s'étendent de manière au moins substantiellement verticalement à partir de deux côtés opposés du paquet de cellules (100), dans lequel ledit au moins un dispositif de mise en contact (200) est réalisé substantiellement en forme de peigne et présente une pluralité de dents (211, 221) qui sont réalisées et disposées de telle sorte qu'une première ou une deuxième patte de connexion (111,112) peut être reçue ou est reçue entre deux dents (211, 221) voisines,
**caractérisé en ce que**
ledit au moins un dispositif de mise en contact (200) présente au moins une barre omnibus (220) et au moins un support (210), dans lequel ladite au moins une barre omnibus (220) et ledit au moins un support (210) sont réalisés en forme de peigne et présentent la pluralité de dents (211, 221).

2. Module de stockage d'énergie (10) selon la revendication 1,
dans lequel le module de stockage d'énergie (10) présente deux dispositifs de mise en contact (200), dans lequel un premier des deux dispositifs de mise en contact (200) met en contact des pattes de connexion (111, 112) sur un premier côté des deux côtés opposés du paquet de cellules (100), et dans lequel un deuxième des deux dispositifs de mise en contact (200) met en contact des pattes de connexion (111, 112) sur un deuxième côté des deux côtés opposés du paquet de cellules (100).

3. Module de stockage d'énergie (10) selon la revendication 1 ou 2,
dans lequel chacune de la première et de la deuxième patte de connexion (111, 112) réalisées de manière plane est reçue respectivement entre deux dents (211, 221) voisines dudit au moins un dispositif de mise en contact (200), et/ou
dans lequel ladite au moins une barre omnibus (220) peut être reçue ou est reçue dans ledit au moins un support (210) et/ou peut être fixée ou est fixée à celui-ci, et/ou
dans lequel ledit au moins un dispositif de mise en contact (200) présente une pluralité de barres omnibus (220, 220', 220", 220"'), et dans lequel la pluralité de barres omnibus (220, 220', 220", 220"') présente une première pluralité de barres omnibus (220, 220") d'un premier matériau et une deuxième pluralité de barres omnibus (220', 220"') d'un deuxième matériau, le premier matériau étant différent du deuxième matériau, et/ou
dans lequel ledit au moins un support (210) et/ou ladite au moins une barre omnibus (220) présentent des dispositifs de centrage, et/ou dans lequel ladite au moins une barre omnibus (220) présente une zone de connexion (223) pour la mise en contact électrique d'un consommateur électrique.

4. Module de stockage d'énergie (10) selon l'une quelconque des revendications 1 à 3,
dans lequel les dents (211) du au moins un support (210) et/ou les dents (221) de ladite au moins une barre omnibus (220) présentent des zones d'extrémité chanfreinées (212),
dans lequel de préférence :
- les dents (211) du au moins un support (210) présentent des zones d'extrémité chanfreinées (212), et
- les dents (221) de ladite au moins une barre omnibus (220) ne s'étendent pas jusqu'à la zone d'extrémité chanfreinée (212) des dents (211) du au moins un support (210) lorsque ladite au moins une barre omnibus (220) est reçue dans ledit au moins un support (210) et/ou est fixée à celui-ci.

5. Module de stockage d'énergie (10) selon l'une quelconque des revendications 1 à 4,
dans lequel ledit au moins un support (210) présente une pluralité d'alésages, et dans lequel ladite au moins une barre omnibus (220) présente une pluralité d'alésages associés, dans lequel les alésages du support (210) sont en affleurement avec les alésages de la barre omnibus (220) lorsque ladite au moins une barre omnibus (220) est reçue dans le support (210) et/ou est fixée à celui-ci,
dans lequel une plaque filetée (230) pourvue d'une pluralité d'alésages est disposée et alignée entre ledit au moins un support (210) et ladite au moins une barre omnibus (220) de telle sorte que les alésages de la plaque filetée (230) sont en affleurement avec les alésages du support (210) et les alésages de la barre omnibus (220).

6. Module de stockage d'énergie (10) selon l'une quelconque des revendications 1 à 5,
dans lequel les pattes de connexion (111, 112) de la pluralité de cellules électrochimiques (110) peuvent être pliées, et/ou
dans lequel le module de stockage d'énergie (10) présente en outre un boîtier de module et un couvercle.

7. Module de stockage d'énergie (10) selon l'une quelconque des revendications 1 à 6,
dans lequel le paquet de cellules (100) présente des supports de cellules (120) pour recevoir et disposer en forme de pile la pluralité de cellules électrochimiques (110).

8. Module de stockage d'énergie (10) selon l'une quelconque des revendications 1 à 7,
dans lequel le paquet de cellules (100) présente deux plaques d'extrémité (130) qui sont prévues aux deux extrémités des cellules électrochimiques (110) disposées en forme de pile.

9. Module de stockage d'énergie (10) selon la revendication 7 ou 8,
dans lequel les supports de cellule (120) présentent des alésages, et dans lequel les plaques d'extrémité (130) présentent des alésages associés qui sont disposés et alignés en affleurement avec les alésages des supports de cellule (120), dans lequel le paquet de cellules (100) présente en outre une pluralité de barres (140) qui peuvent passer à travers les alésages des supports de cellule (120) et des plaques d'extrémité (130) afin de les relier.

10. Module de stockage d'énergie selon la revendication 8 ou 9,
dans lequel une plaque de mousse (150) est prévue respectivement entre un support de cellule (120) extérieur et l'une des plaques d'extrémité (130).

11. Procédé permettant d'assembler un module de stockage d'énergie (10), le procédé présentant les étapes suivantes consistant à :
- disposer en forme de pile une pluralité de cellules électrochimiques (110) en un paquet de cellules (100), dans lequel chacune de la pluralité de cellules électrochimiques (110) présente une première patte de connexion (111) réalisée de manière plane pour mettre en contact une première électrode de la cellule électrochimique (110) respective et une deuxième patte de connexion (112) réalisée de manière plane pour mettre en contact une deuxième électrode de la cellule électrochimique (110) respective, et dans lequel le paquet de cellules (100) est réalisé de telle sorte que la première et la deuxième patte de connexion (111, 112) réalisées de manière plane s'étendent au moins substantiellement verticalement à partir de deux côtés opposés du paquet de cellules (100) ;
- pousser au moins un premier dispositif de mise en contact (200) sur des pattes de connexion (111, 112) réalisées de manière plane sur un premier côté des deux côtés opposés du paquet de cellules (100), dans lequel ledit au moins un premier dispositif de mise en contact (200) est réalisé substantiellement en forme de peigne et présente une pluralité de dents (211, 221) qui sont réalisées et disposées de telle sorte qu'une patte de connexion (111, 112) peut être reçue ou est reçue entre deux dents (211, 221) voisines, respectivement,
**caractérisé en ce que**
ledit au moins un premier et/ou ledit au moins un deuxième dispositif de mise en contact (200) présentent au moins une barre omnibus (220) et au moins un support (210), dans lequel ladite au moins une barre omnibus (220) et ledit au moins un support (210) sont réalisés en forme de peigne et présentent une pluralité de dents (211, 221).

12. Procédé selon la revendication 11, le procédé présentant en outre l'étape suivante consistant à :
- pousser au moins un deuxième dispositif de mise en contact (200) sur des pattes de connexion (111, 112) réalisées de manière plane sur un deuxième côté des deux côtés opposés du paquet de cellules (100), dans lequel ledit au moins un deuxième dispositif de mise en contact (200) est réalisé substantiellement en forme de peigne et présente une pluralité de dents (211, 221) qui sont réalisées et disposées de telle sorte que respectivement une patte de connexion (111, 112) peut être reçue ou est reçue entre deux dents (211, 221) voisines, et/ou
dans lequel les pattes de connexion (111, 112) présentent un film de protection (113), et dans lequel le procédé présente en outre les étapes suivantes consistant à :
- retirer le film de protection (113) des pattes de connexion (111, 112) de la pluralité de cellules électrochimiques (110), et/ou
- plier les pattes de connexion (111, 112) de telle sorte que les cellules électrochimiques (110) peuvent être reliées ou sont reliées électriquement audit au moins un premier et/ou audit au moins un deuxième dispositif de mise en contact (200).

13. Procédé selon la revendication 11 ou 12, dans lequel le paquet de cellules (100) présente des supports de cellule (120) pour recevoir et disposer en pile la pluralité de cellules électrochimiques (110), ainsi que deux plaques d'extrémité (130) qui sont prévues aux deux extrémités des cellules électrochimiques (110) disposées en forme de pile.

14. Procédé selon l'une quelconque des revendications 11 à 13, le procédé présentant en outre l'étape suivante consistant à :
- souder les pattes de connexion (111, 112) de la pluralité de cellules électrochimiques (110) audit au moins un premier et/ou au moins un deuxième dispositif de mise en contact (200) en utilisant un outil à souder.

15. Procédé selon la revendication 13 ou la revendication 14,
dans lequel l'outil à souder et/ou le support de cellule (120) sont réalisés de telle sorte que l'outil à souder peut être reçu au moins par endroits dans les supports de cellule (120) et/ou peut être inséré dans les supports de cellule (120).
